Europäisches Patentamt

**European Patent Office**

**Office européen des brevets**

(19)

(11) Publication number: **0 098 816**
A2

# EUROPEAN PATENT APPLICATION

(12)

(21) Application number: 83850151.8

(22) Date of filing: 02.06.83

(51) Int. Cl.³: **G 02 B 7/26**

(30) Priority: 01.07.82 SE 8204086

(43) Date of publication of application: 18.01.84
Bulletin 84/3

(84) Designated Contracting States: **DE FR GB IT**

(71) Applicant: **TELEFONAKTIEBOLAGET L M ERICSSON,
S-126 25 Stockholm (SE)**

(72) Inventor: **Ingre, Lars Paul, Buntmakarevägen 86,
S-141 73 Huddinge (SE)**

(74) Representative: **Wennerholm, Kristian et al,
TELEFONAKTIEBOLAGET L M ERICSSON,
S-126 25 Stockholm (SE)**

(54) **Method of manufacturing a fixed and a movable part provided with optical fibres.**

(57) The invention relates to a method of manufacturing a fixed part and a movable part provided with mutually parallel optical fibres incorporated in a fibre optical relay. The fibres (A1-A2, B1-B2, C1-C2) are fixed to a base plate (1) in V-shaped grooves (2a-2c) with the aid of glueing or bonding. The base plate and fibres are then parted by a cut (X-X) at right angles to the axial direction of the fibres and to a planar edge surface of the base plate. There is thus obtained two mutually conforming parts forming the fixed part and the movable part in the fibre optical relay.

# METHOD OF MANUFACTURING A FIXED AND A MOVABLE PART PROVIDED WITH OPTICAL FIBRES

## TECHNICAL FIELD

The present invention relates to a method of manufacturing a fixed and a movable part provided with optical fibres, to provide an optical switching function. Such a function is used in a fibre-optical relay for switching between a first plurality of fibres and a second plurality of fibres.

## BACKGROUND ART

In order to provide an optical switching function in an optical relay, for example, optical fibres may be used which are mechanically moved in relation to each other so that light from an incoming fibre can be optionally switched to one of several alternative outgoing fibres. Several different solutions to such optical switching functions have been proposed, e g in the British Patent 1 580 109 and the German "Offenlegungsschrift" 3 012 450.

The disadvantage of the solutions in the prior art is the expensive handling of the fibres in the provision of the switching function. The fibres must have their ends cut (ground) flat and placed correctly within some $\mu$m in relation to each other both axially and radially if the optical attenuation is to be kept low.

## DISCLOSURE OF INVENTION

The present invention relates to a method of manufacturing the fixed and the movable part included in a fibre-optical switching function of the kind mentioned above, and has its primary application in the fibre optical relay described in the Swedish Patent Application 8204085-8.

The object of the invention is thus to provide a method of manufacturing a fixed part and a movable part provided with optical fibres intended to be incorporated in a fibre optical relay where the handling of the fibres is at a minimum during manufacture without deteriorating the performance of the relay switching function.

The inventive method is characterized as it appears from the following claims.

## BRIEF DESCRIPTION OF DRAWING

The invention will now be described in detail with reference to the accompanying drawing where

Figure 1 is a perspective view of a base plate with optical fibres, forming the basic material in manufacture according to the invention,

Figure 2 is a cross section of the base plate and fibres according to Figure 1,

Figure 3 is the same base plate with fibres according to Figure 1 but cut according to the proposed method,

Figure 4 is a perspective view of the fixed part and the movable part during aligning after parting has been carried out.

## BEST MODES FOR CARRYING OUT THE INVENTION

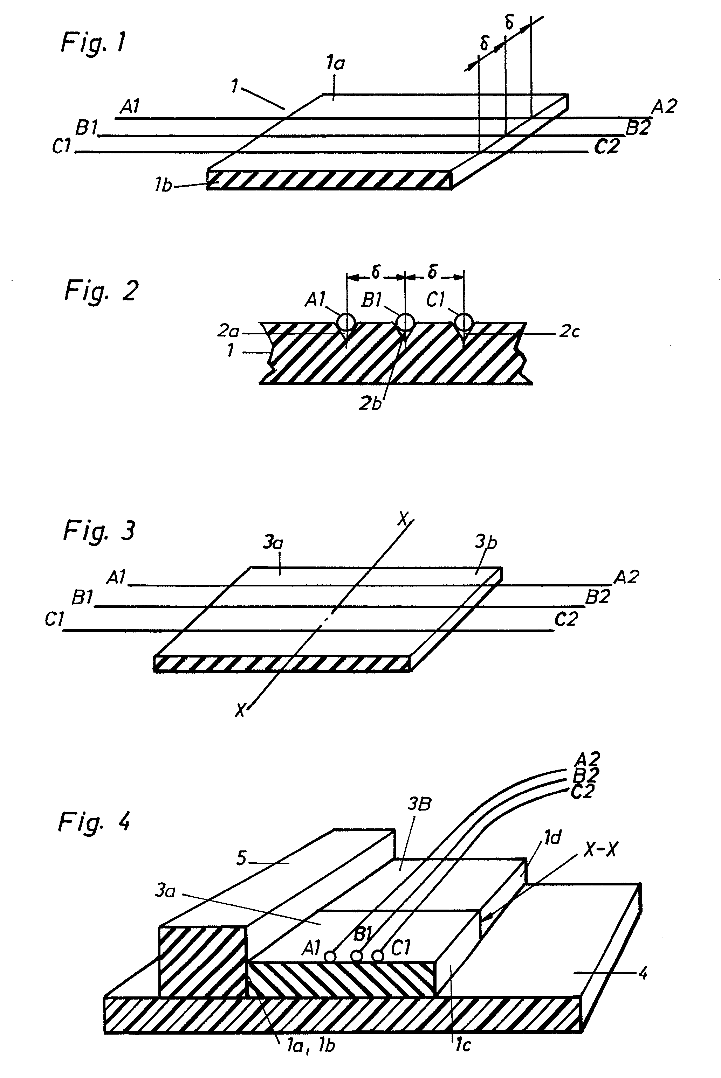

In Figure 1 a flat plate 1 forms the common base plate for carrier for three optical fibres A1-A2, B1-B2 and C1-C2, in this case. The plate 1 is suitably made from silicon and has a planar upper side 1a and at least one completely planar edge surface 1b. The fibres A1-A2, B1-B2 are fixed in parallel to the upper side 1a with a given spacing . It will be seen from Figure 2 that the fixation of the fibres can be carried out with the aid of three V-grooves 2a-2c. These grooves have been conventionally formed by etching along the planar surface 1a in the axial direction of the fibres, using a photographic imprint. The walls of the V-grooves form a given angle to the normal (about $35^{\circ}$) due to the chrystallinic properties of the silicon material, a so-called AT section. The fibres A1-A2, B1-B2, C1-C2 are then glued or adhered to the respective edged groove. The positions of the fibres can also be fixed without grooves on the plate 1, e.g. with the aid of a precision tool for the adhering process.

When the fibres have thus been fixed on the carrier plate 1, the plate and fibres are parted along a cut X-X according to Figure 3. Parting can be performed by a cutting tool, e.g. a power saw, the plate being parted so that the cut X-X is substantially at right angles to the planar edge surface 1b.

Two parts 3a and 3b are thus formed, with the fibre ends A1, B1, C1 on part 3a and the fibre ends A2, B2, C2 on part 3b, the end surfaces of the respective fibres conforming mutually.

The switching function is obtained by placing the parts 3a and 3b with their undersides against a reference plane as illustrated in Figure 4, so that they meet at the cut X-X according to Figure 3. The parts 3a, 3b are oriented as they were before parting, the initially unparted fibres A1-A2, B1-B2, C1-C2 being optically coupled. This initial situation is easy to provide with very small mechanical tolerances, which gives low optical attenuation at the junctions of the fibre ends. In Figure 4, the initial position according to Figure 3 has been provided with the aid of a guide member 5 resting on the reference plane 4.

The part 3a may constitute the fixed part in a fibre optical relay according to the mentioned Swedish Patent Application and is firmly adhered to the substructure. In the relay the guide member has been replaced by a piece of soft iron with one edge surface lying against the edge surface 1a of the fixed part 3a and also partly against the edge surface 1b of the movable part 3b. Switching is obtained by displacing the movable part along the reference plane parallel to the cut X-X a distance equal to the fibre spacing $\delta$ from the initial position. For example, the connection B1-A2, C1-B2 is obtained after switching. In the relay according to the above-mentioned Swedish Patent Application the actuation of the movable part 3b is obtained with a magnetically activated actuating arm to provide the switch.

Under the action of the actuating arm, the movable part 3b will be fixed in its position with the aid of a guide plate after switching. The edge surface 1d must then be completely planar, so that on its engagement against the guide plate the centre lines of the fibre ends B1-A2 and C1-B2 (as described above) will coincide.

In the initial position, the end surfaces of the fibres A1-A2, B1-B2, C1-C2 are in practically perfect mutual alignment and the attenuation across the switching point is very low. In the switching position according to the above, e.g. when the end surface of the fibre B1 is mated with the end surface of the fibre A2 a certain small deviation is impossible to avoid and the somewhat higher attenuation must possibly be compensated by an amplifier. After switching back to the initial position, the fibre end surfaces are once again practically

4

perfectly aligned and attenuation is minimal. No compensating amplification is therefore necessary in the associated loop.

The low attenuation over the switching point enables passive bypass connection of a large number of nodes in cascade along a transmission path such as a loop, without the need of introducing repeaters.

CLAIMS

1   A method of manufacturing a fixed and a movable part provided with optical fibres included in a fibre optical relay in which an optical switching function is performed by moving the movable part from a rest position and relative the fixed part in a direction at right angles to the axial direction of the fibres, said fibres (A1-A2, B1-B2, C1-C2) being fixed mutually parallel with a given spacing (6) on a common carrier (1), characterized in that carrier and fibres are parted along a cut at right angles to the axial direction of the fibres to form the fixed part and the movable part (3a and 3b) such that mutually conforming fibre end surfaces are formed which are mutually opposing in said rest position.

2   Method as claimed in claim 1, characterized in that said parting of the carrier and fibres is performed by cutting with the aid of a cutting tool such as a saw or the like.

0098816

Fig. 1

Fig. 2

Fig. 3

Fig. 4